# EUROPEAN PATENT SPECIFICATION

(11) **EP 2 769 845 B1**
(45) Date of publication and mention of the grant of the patent: **21.09.2016**
(21) Application number: 12841160.0
(22) Date of filing: 07.03.2012
(51) Int. Cl.: A24D 1/02, A24C 5/00, B41M 1/04, B41M 3/00

(54) **SINGLE LAYER PRINTING METHOD OF PAPER WRAPPER FOR SMOKING ARTICLES**
EINLAGIGES PAPIERDRUCKVERFAHREN FÜR RAUCHERBEDARFSGEGENSTÄNDE
PROCÉDÉ D'IMPRESSION MONOCOUCHE DE PAPIER POUR DES ARTICLES À FUMER

(30) Priority: 17.10.2011 ES 201131662
(43) Date of publication of application: 27.08.2014
(73) Proprietor: Miquel y Costas & Miquel, S.A., 08006 Barcelona (ES)
(72) Inventor: TOSAS FUENTES, Agustín, E-08006 Barcelona (ES); DE MARISCAL RUIGOMEZ, Pablo, E-08006 Barcelona (ES)
(74) Representative: Ungria López, Javier
(86) International application number: PCT/ES2012/070148
(87) International publication number: WO 2013/057339

(56) References cited:
- EP-A1- 0 193 607
- EP-A1- 0 251 254
- EP-A1- 1 333 729
- EP-A1- 1 417 899
- EP-A2- 0 375 844
- EP-A2- 0 378 774
- EP-A2- 0 864 259
- WO-A1-99/51439
- WO-A2-2009/000499
- GB-A- 1 471 943

## Description

### FIELD OF THE INVENTION

The present invention belongs to the technological field of paper printing, in particular to paper wrappers for smoking articles, more particularly to paper wrappers for self-extinguishing smoking articles (also called "Low Ignition Propensity", or LIP) and specifically to the flexographic printing technique.

### STATE OF THE ART

The manufacture of LIP paper wrappers for smoking articles by means of printing bands are based on the transference of a liquid ink from a printing form to the paper wrapper. The aim is to stop the cigarette burning when the combustion cone reaches the printed band, under the conditions defined by the ASTM E2187 and ISO 12863 standards. To achieve this goal, the printed band has to reduce the gas exchange between the atmosphere and the lit tobacco.

This gas exchange takes place through the pores of the paper wrapper and so, the reduction of this gas exchange entails the closure of these pores to a certain extent. This reduction can be measured using air permeability measurements or gas diffusion capacity measurements. To simplify, the term "diffusivity" shall be employed in this specification to mean "diffusion capacity". The instruments currently available to measure diffusivity use carbon dioxide and nitrogen, and they measure the rate of diffusion of the former in the latter, through the printed band.

In the field of paper wrappers for smoking articles, air permeability is measured using the CORESTA n° 40 method, adopted as standard by the industry. This method measures the volume of the air flow passing through a defined surface over a given length of time, when a pressure difference is applied between both faces of the substrate. These measurements are usually given in ml/min.cm², at a pressure difference of 1 kPa. This is the so-called CORESTA Unit or CU.

On the other hand, the diffusivity, D*, of a gas through a substrate measures the molecular exchange rate between both faces of the substrate, among which there is no pressure difference. Such measurements are given in cm/s. Currently, this method is not an industry standard.

One important difference between both measurements is that, whereas the natural permeability of the paper wrapper is influenced by all its pores, independently of their size, only small pores, of a diameter of up to approximately 10 µm influence diffusivity.

Those pores are referred to as "pinholes" in the terminology used by the cigarette paper field. Pores larger than approximately 10 µm in diameter, a size large enough to be visible when the paper wrapper is observed through the light, hardly have any influence on diffusivity or on the combustion rate of the cigarette. The latter is evidenced by the fact that when the cigarette paper wrapper is perforated using the spark discharge method (known as electrostatic perforation, a process that produces perforations of approximately 10 to 80 µm), the combustion rate of the cigarette does not increase and diffusivity only increases very slightly, no matter how much its air permeability increases. However, the ventilation of the cigarette does increase. Therefore, in theory, diffusivity would be a more suitable measurement of the combustibility of the cigarette than air permeability. Consequently, the industry tends to use it to predict the combustibility of the cigarette with increasing frequency.

In this context, the most relevant parameters defining a cigarette paper wrapper are its permeability to air and its diffusivity, because they correlate best with the smoke ventilation during the consumption of the cigarette by the smoker and with the static combustion rate of the cigarette and therefore, they affect to its tar and nicotine content directly. Higher air permeability and diffusivity values imply a greater open pore area.

On the basis of the above explanation, it is logical to come to the conclusion that the higher the air permeability and the diffusivity of the paper wrapper, the greater the need for material applied onto it to achieve the desired reductions of air permeability and diffusivity.

Paper wrappers with a high air permeability (of over 50 CU) present the problem of making compatible the amount of solids needed in the ink with its viscosity, because, as mentioned in patent EP1417899, "A very important parameter to be taken into account when printing a paper by any method, is the viscosity of the ink. In techniques such as heliogravure or flexography, there is a limitation related to the viscosity ink, meaning that those inks with high viscosity levels do not facilitate the transfer of the ink to the stretch to be printed, or from there to the printing form or to the paper, depending on the system used. Moreover, a high ink viscosity causes a loss of definition of texts and small drawings. Therefore, when selecting a binder, besides its specific effect of reducing the air permeability of the paper, its ignition tendency and its influence over cigarette taste, the corresponding limitation of viscosity should also be taken into account. As there is a direct relationship between the solid content of a solution and its viscosity, the viscosity limit is interpreted as a limit to the solids in the ink and therefore, a limit to the amount of material applied to the paper."

In order to overcome this problem, the application system commonly used applies various consecutive layers to the same area, as described in patent EP 1333729. The main problem this configuration presents is that it is difficult to control the stability of the printing conditions when using various inkers at the same time. This is why it would be advantageous to use only one inker.

EP 1333729 shows as the only advantage of this configuration the reduction of wrinkles produced by any printing job which prints a water-based ink on paper wrappers and, even more substantially, when a large amount of ink is applied to a light-weight cigarette paper wrapper (about 24/28 g/m²). The present invention is advantageous in that it is not necessary to align the inkers. This means that the inkers are aligned in such a way that in the final drawing, the different colors are in exactly the place they should be, so that the drawing is not blurry. This advantage provides a greater control of the operation and makes the printing method herein described more versatile, for example, by allowing to change the inker in case problems arise with the inkers on use.

### DESCRIPTION OF THE INVENTION

The object of the present invention is a single layer printing method of an ink on a paper wrapper for smoking article, to obtain a paper wrapper with low propensity to ignition by employing the flexographic technique, characterized in that the printing is carried out using a central drum flexographic printing machine using only one printing group with an anilox with a capacity of between 10 and 40 cm³/m² and a printing cylinder equipped with a printing form, also characterized in that an ink is used which comprises at least one film-forming substance and one mineral filler. Said printing form may be a group formed by a plastic film known as a stencil plate, glued to the printing cylinder with an adhesive, or by a hollow cylinder or sleeve, manufactured from a polymeric material, that is introduced into the printing cylinder.

According to particular embodiments, the film-forming substance is gum arabic.

According to additional particular embodiments, the mineral filler is at least calcium carbonate.

The film-forming substance, preferably gum arabic, may be present in the ink in a percentage comprised between 40 and 95% by weight of the ink solids, preferably between 50 and 90 g/m² and more preferably between 60 and 85 g/m², being the upper and lower limits included in all the indicated intervals.

The filler, preferably calcium carbonate, may be present in the ink in a percentage comprised between 5 and 60% by weight of the ink solids, preferably between 10 and 45 g/m² and more preferably between 15 and 38 g/m², being the upper and lower limits included in all the indicated intervals.

The ink may furthermore comprise a combustion agent. Said combustion agent may be present in the ink in a percentage comprised between 2 and 10% approximately by weight of the ink solids, preferably between 2.5 and 6 g/m² and more preferably between 3.4 g/m² and 3.6 g/m², being the upper and lower limits included in all the indicated intervals.

According to particular embodiments, the combustion agents may be, for example, salts of organic acids such as citric, maleic, lactic, acetic, tartaric acids and other similar acids. The inventors have found that citric acid salts are especially useful in the invention, especially the metal salts of citric acid such as sodium and potassium citrates and more particularly, potassium citrate.

In the method of the invention, between 0.5 and 7 g/m² of solids are deposited on a paper wrapper for smoking articles, preferably between 0.8 and 4 g/m² and even more preferably between 1 and 3.8 g/m², being the upper and lower limits included in all the indicated intervals.

The ink may be applied onto the paper wrapper for smoking articles continuously, in straight, wavy or zig-zag bands, or in any other way which ensure that the cigarettes manufactured with this paper wrapper do extinguish.

Using the single-layer printing method of this invention, the areas treated with the ink herein disclosed have a diffusivity of between 0.010 and 0.300 cm/s.

According to a preferred embodiment of the single layer printing method of this invention, the ink comprises:
- between 25% and 40% of solids;
- a film-forming substance, namely gum arabic, in a percentage comprised between 40% and 95% by weight relative to the ink solids and;
- a filler such as, for example, calcium carbonate, in a percentage comprised between 5% and 60% by weight relative to the ink solids.

According to a particularly preferred embodiment of the single layer printing method of this invention, the ink comprises:
- between 26% and 39% of solids;
- gum arabic in a percentage comprised between 62% and 85% by weight relative to the ink solids and;
- calcium carbonate in a percentage comprised between 15% and 38% by weight relative to the ink solids.

Printing by means of the flexographic technique with central drum is based on the application of the same or several inks, using various printing groups placed around a central drum, outside which the support to be printed moves.

Each printing group has:
- an engraved cylinder with cells having variable volume and design (known as anilox) and;
- a cylinder with the design to be printed in relief (printing cylinder and printing form, respectively).

Other components of each printing group are an ancillary reservoir, pipes, an inker and a scraper, or a scraper chamber, according to the specific design of the printing machine.

The ink is transferred to the anilox, the excess ink is removed from the anilox by means of a scraper, the ink goes to the printing form and from there, to the support to be printed.

If the ink fills all the cells of the anilox and the excess ink is completely removed, the transfer of the ink to the support will be regulated by the pressure between the anilox and printing form, by the pressure between the printing form and the support and by the material and the hardness of the printing form.

Depending on the printing conditions, the ink transfer (the percentage of weight of dry ink on the support over the weight of dry ink on the anilox) may vary between 30% and 50%.

This is a system based on the application of the ink from an embossed form on the support to be printed. Therefore, the pressure of the printing form on the support is a variable that greatly affects the final printing.

On the other hand, the pressure of the anilox on the printing form also influences the final printing, although in a lesser way. For example, a 20 micron increase in the positioning of the anilox relative to the printing form results in a 4.7% reduction in diffusivity.

The influence of the positioning of the printing cylinder relative to the support (that is to say, the pressure of the printing form on the support) on diffusivity is due to two factors:
- the transfer of ink to the paper wrapper (percentage of weight of dry ink on the paper wrapper, over the weight of dry ink in the anilox) and;
- the penetration of the ink in the support.

The first factor is regulated by the pressures between the anilox and the printing cylinder and between the printing cylinder and the support. The second factor is regulated by the pressure between the printing cylinder and the support only.

The most important advantages obtained by using a printing method like that of the present invention, which uses only one printing group to obtain a single layer of ink, as opposed to multi layer printing methods, are as follows:
1. It is no longer necessary to align printing groups, something that is necessary in multi layer printing methods.
2. It is easier to control the printing operation, as only one printing group has to be managed and controlled.
3. In printing machines equipped with various inkers or printing groups, the flexibility of the printing process is higher because it is possible to change from one inker to another.
4. Another important advantage of the single layer printing method is that it saves ink.

The present invention also refers to a paper wrapper for smoking articles, characterized in that it is obtainable by the method described in this specification.

The present invention also refers to a smoking article that comprises a paper wrapper obtainable by the method described in this specification.

### BRIEF DESCRIPTION OF THE DRAWINGS

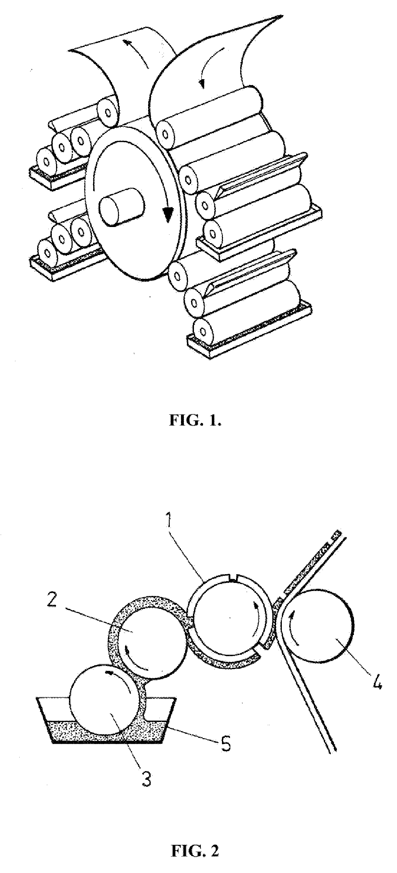

Figure 1 shows a central drum flexographic printing machine, based on the application of one ink or various inks by means of several printing groups, according to a method of the state of the art, said printing groups being placed around a central drum, outside which the support moves. Each inker consists basically of a cylinder (anilox) engraved with cells having variable designs and volume, and a printing cylinder with the design of the form to be printed in relief (the printing cylinder).
Figure 2 shows a schematic representation of the flexographic printing technology, which shows how the ink is transferred to the anilox, the excess ink is removed with a scraper and the ink goes from the anilox to the printing form and from there, to the support to be printed.

Numerical references in figure 2:
1. Stencil plate and printing cylinder
2. Anilox
3. Transfer cylinder
4. Material carrying cylinder
5. Tray

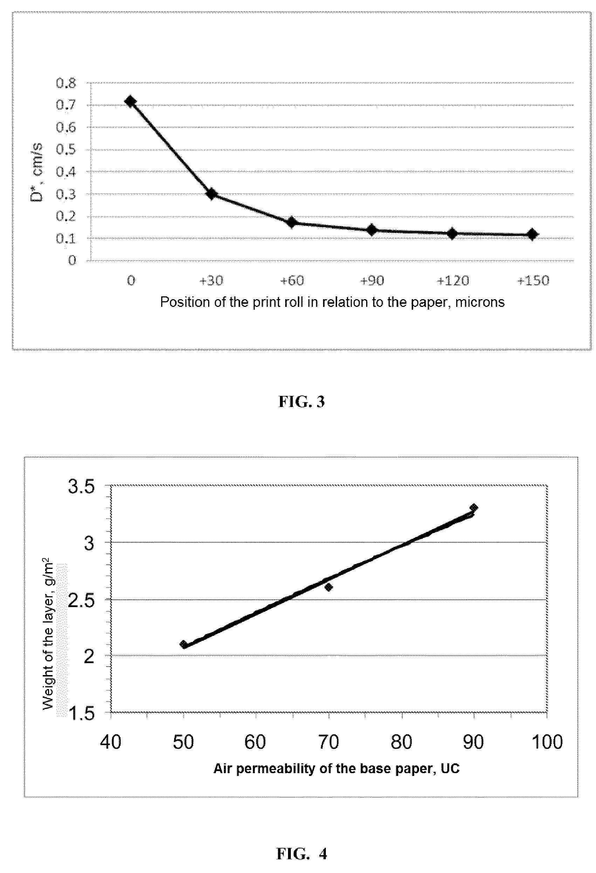

Figure 3 is a graph obtained using only one inker, according to the present invention, with an anilox of a volume of 27 cm³/m² and a stencil plate with a Shore hardness of 80A. The graph presents the diffusivity value versus the positioning of the printing cylinder, relative to the support. This graph shows the influence on the final print, of the pressure of the printing form onto the support. In this figure, the value "0" represents the printing form coming into contact with the paper wrapper. +30 represents a forced contact of additional 30 µm of forced contact. +60 represents a forced contact of additional 60 µm, and so on.

Figure 4 shows the weight (in g/m²) of dry matter of ink in the band necessary to obtain 100% self-extinguishment of the cigarettes, according to the ASTM E2187 and ISO 12863 standards, as a function of the air permeability of the base paper wrapper. In all these cases, the single layer printing method was used. The volume of the anilox was changed depending on the weight of the layer required. The ink used had the following characteristics: 35% total solids, consisting of 22.4% gum arabic, 9.1% calcium carbonate and 3.5% potassium citrate.

### EXAMPLES

As already stated above, the most relevant parameters defining a cigarette paper wrapper are its permeability to air and its diffusivity, given that these parameters correlate best with the static combustion rate of the cigarette and with the smoke ventilation upon the consumption of the cigarette by the smoker. Therefore, they influence directly the tar, nicotine and carbon monoxide contents of cigarettes. Higher air permeability and diffusivity values imply a larger open pore area.

### COMPARISON OF A SINGLE LAYER PRINTING METHOD WITH A DOUBLE LAYER PRINTING METHOD

**Example 1.-** Comparison of two flexographic printing machines, one using only one inker equipped with a 10.4 cm³/m² anilox, and the second one using two inkers equipped with aniloxes of 16 and 9.5 cm³/m², respectively. The ink used in both cases is the same, containing 37% solids consisting of 25.2% gum arabic and 11.8% calcium carbonate. The printing form was a printing cylinder equipped with a 2.84 mm thick stencil plate with a Shore hardness of 80A, glued to the printing cylinder with a 0.20 mm thick adhesive. The base paper wrapper used had an air permeability of 50 CU. The following table shows the results obtained, the aim being a diffusivity of 0.150 cm/s:

| ANILOX, cm³/m² | DIFFUSIVITY, cm/s | LAYER WEIGHT, g/m² | TYPE OF PRINTING METHOD |
|---|---|---|---|
| 16 + 9.5 | 0.175 | 3.4 | DOUBLE LAYER |
| 10.4 | 0.160 | 1.5 | SINGLE LAYER |

The weight of ink needed to obtain a diffusivity of 0.150 cm/s in a paper wrapper with an air permeability of 50 CU was of 1.5 g/m² using the single layer printing method and of 3.4 g/m² using the double layer printing method, i.e. 126% more.

**Example 2.-** Comparison of two prints made using the same flexographic printing machine, one using just one inkers with an anilox of 18 cm³/m², and the second one using two inkers with aniloxes, of 18 and 12 cm³/m², respectively. The ink used in both cases is the same, containing 37% solids, consisting of 25.2% gum arabic and 11.8 % calcium carbonate. The printing form was a printing cylinder equipped with a 2.84 mm thick stencil plate with a Shore hardness of 80A, glued to the printing cylinder with a 0.20 mm thick adhesive. The base paper wrapper used had an air permeability of 50 CU. The following table shows the results obtained, the aim being a diffusivity of 0.150 cm/s:

| ANILOX, cm³/m² | DIFFUSIVITY, cm/s | LAYER WEIGHT, g/m² | TYPE OF PRINTING METHOD |
|---|---|---|---|
| 18 + 12 | 0.157 | 3.5 | DOUBLE LAYER |
| 18 | 0.161 | 1.9 | SINGLE LAYER |

The weight of ink needed to obtain a diffusivity of 0.150 cm/s in a paper wrapper with an air permeability of 50 CU is of 1.9 g/m² using the single layer printing method and of 3.5 g/m² using a double layer printing method, i.e. 84% more.

### OTHER EXAMPLES OF SINGLE LAYER PRINTING METHODS

**Example 3.-** A test was carried out using a paper wrapper made of 100% wood fiber with an air permeability of 70 CU. Printing was done with a central drum flexographic printing machine using one printing group, with an 18 cm³/m² anilox and a printing cylinder equipped with a 1.14 mm thick stencil plate and a Shore hardness of 80A, glued to the printing cylinder with a 0.20 mm thick adhesive. The ink formulation used was 22% by weight of gum arabic, 9.1% by weight of calcium carbonate and 3.5% by weight of potassium citrate (34.6% solids), the rest being water.

The results were as follows, the aim being a diffusivity of 0.150 cm/s:

| ANILOX, cm³/m² | DIFFUSIVITY, cm/s | LAYER WEIGHT, g/m² | TYPE OF PRINTING METHOD |
|---|---|---|---|
| 18 | 0.145 | 2.4 | SINGLE LAYER |

**Example 4.-** An experiment was carried out using 100% flax fiber paper wrapper with an air permeability of 30 CU. Printing was performed with a central drum flexographic printing machine using one printing group, with a 10.4 cm³/m² anilox and a printing cylinder equipped with a 2.84 mm thick stencil plate and a Shore hardness 80A, glued to the printing cylinder with a 0.20 mm thick adhesive. The ink formulation used was 21% by weight of gum arabic, 4.2% by weight of calcium carbonate and 0.8% by weight of potassium citrate (26% solids), the rest being water.

The results were as follows, the aim being a diffusivity of 0.110 cm/s:

| ANILOX, cm³/m² | DIFFUSIVITY, cm/s | LAYER WEIGHT, g/m² | TYPE OF PRINTING METHOD |
|---|---|---|---|
| 10.4 | 0.090 | 1.36 | SINGLE LAYER |

**Example 5.-** In this trial, an ink with 38% solids (14.1% of calcium carbonate relative to the weight of the dry material and 23.9% of gum arabic, the rest being water) was applied onto a paper wrapper with an air permeability of 90 CU. Printing was carried out with a central drum flexographic printing machine using one printing group with a 26 cm³/m² anilox and a printing cylinder equipped with a sleeve type printing form with a Shore hardness of 80A.

The results were as follows, the aim being a diffusivity of 0.200 cm/s:

| ANILOX, cm³/m² | DIFFUSIVITY, cm/s | LAYER WEIGHT, g/m² | TYPE OF PRINTING METHOD |
|---|---|---|---|
| 26 | 0.170-0.180 | 3.0 | SINGLE LAYER |

**Example 6.-** In this trial, an ink with 39% solids (14.8% calcium carbonate relative to the weight of the dry material and 24.2% gum arabic, the rest being water) was applied on paper wrapper with an air permeability of 120 CU. The printing was performed with a central drum flexographic printing machine using one printing group with a 31 cm³/m² anilox and a printing cylinder equipped with a sleeve type printing form with a Shore hardness of 80A.

The results were as follows, the aim being a diffusivity of 0.200 cm/s:

| ANILOX, cm³/m² | DIFFUSIVITY, cm/s | LAYER WEIGHT, g/m² | TYPE OF PRINTING METHOD |
|---|---|---|---|
| 31 | 0.190-0.200 | 3.8 | SINGLE LAYER |

**Example 7.-** An experiment was done using a 100% flax fiber paper wrapper with an air permeability of 19 CU. Printing was done with a central drum flexographic printing machine using one printing group with a 14 cm³/m² anilox and a printing cylinder equipped with a 2.84 mm thick stencil plate with a Shore hardness of 80A, glued to the printing cylinder by means of a 0.20 mm thick adhesive. The ink formulation used was 25.1% by weight of gum arabic, 5% by weight of calcium carbonate and 0.93% by weight of potassium citrate (31% solids), the rest being water.

The results were as follows, the aim being a diffusivity of 0.110 cm/s:

| ANILOX, cm³/m² | DIFFUSIVITY, cm/s | LAYER WEIGHT, g/m² | TYPE OF PRINTING METHOD |
|---|---|---|---|
| 14 | 0.110 | 1.5 | SINGLE LAYER |

**Example 8.-** In this test, an ink with 36% solids (5.4% calcium carbonate relative to the weight of the dry material and 30.6% gum arabic, the rest being water) was applied onto a paper wrapper with an air permeability of 80 CU.
Printing was carried out with a central drum flexographic printing machine using one printing group with a 26 cm³/m² anilox and a printing cylinder equipped with a sleeve type printing form with a Shore hardness of 80A.

The results were as follows, the aim being a diffusivity lower than 0.100 cm/s:

| ANILOX, cm³/m² | DIFFUSIVITY, cm/s | LAYER WEIGHT, g/m² | TYPE OF PRINTING METHOD |
|---|---|---|---|
| 26 | 0.069 | 3.02 | SINGLE LAYER |

The intervals of capacities of the aniloxes (standards of 2 to 35 cm³/m², and even higher) and the various designs of the engraved volume, allow provide high flexibility and the ability to print paper wrappers with a high initial air permeability in one single pass.

## Claims

1. A single layer printing method of water-based ink on a paper wrapper for smoking articles, with the aim of obtaining a paper wrapper for smoking articles with low propensity to ignition by the flexographic technique, **characterized in that** (1) the printing is carried out in a central drum flexographic printing machine using only one printing group, (2) said group is equipped with
- an anilox with a capacity of between 10 and 40 cm³/m²
- and a printing cylinder equipped with a printing form selected from:
- a stencil plate plus an adhesive,
- and a sleeve, and
(3) **in that** an ink that comprises at least one film-forming substance and a mineral filler is used.

2. A single layer printing method according to claim 1, **characterized in that** the film-forming substance is gum arabic.

3. A single layer printing method according to claim 1, **characterized in that** the mineral filler is, at least, calcium carbonate.

4. A single layer printing method according to claim 1, **characterized in that** the film-forming substance is gum arabic and the mineral filler is calcium carbonate.

5. A single layer printing method according to claim 2, **characterized in that** the amount of gum arabic present in the ink is between 40% and 95% by weight relative to ink solids.

6. A single layer printing method according to claim 3, **characterized in that** the amount of calcium carbonate present in the ink is between 5% and 60% by weight relative to the weight of the ink solids.

7. A single layer printing method, according to claim 1, **characterized in that** the ink also comprises a combustion agent.

8. A single layer printing method according to claim 7, **characterized in that** the amount of combustion agent present in the ink is between 3% and 10% by weight relative to the weight of the ink solids.

9. A single layer printing method according to claim 7, **characterized in that** the combustion agent is a salt from an organic acid.

10. A single layer printing method according to claim 9, **characterized in that** the combustion agent is an organic acid salt selected from the group of citric, maleic, lactic, acetic and tartaric acids and mixtures thereof.

11. A single layer printing method according to claim 10, **characterized in that** the combustion agent is a metal salt of citric acid.

12. A single layer printing method according to claim 11, **characterized in that** the combustion agent is a potassium salt of citric acid.

13. A single layer printing method according to claim 1, **characterized in that** an amount of between 0.5 and 7 g/m² of solids are deposited on the paper wrapper for smoking article.

14. A single layer printing method according to claim 1, **characterized in that** the ink is applied to the paper wrapper for smoking articles continuously.

15. A single layer printing method according to claim 1, **characterized in that** the ink is applied to the paper wrapper for smoking articles in straight, wavy or zigzag band form.

16. A single layer printing method according to claim 1, **characterized in that** the ink is applied in such amount that areas treated with it have a diffusivity of between 0.010 and 0.300 cm/s.

17. A single layer printing method according to claim 1, **characterized in that** the ink used comprises:
- between 26% and 39% solids,
- gum arabic in a percentage comprised between 62% and 85% by weight relative to the ink solids and
- calcium carbonate in a percentage comprised between 15% and 38% by weight relative to the ink solids.

18. A paper wrapper for smoking article **characterized in that** it is obtainable by the method defined in one of claims 4 or 17.

19. A smoking article **characterized in that** it comprises a paper wrapper obtainable by the method described in one of claims 4 or 17.

## Patentansprüche

1. Einlagiges Druckverfahren für wasserbasierte Tinte auf eine Papierumhüllung für Rauchartikel, mit dem Ziel eine Papierumhüllung für Rauchartikel mit herabgesetzter Neigung zur Entzündung durch die flexografische Technik zu erhalten, **dadurch gekennzeichnet, dass** (1) das Drucken an einer Flexodruckmaschine mit zentraler Trommel unter Verwendung von nur einer Druckgruppe durchgeführt wird, (2) diese Gruppe mit Folgendem ausgerüstet ist
- einer Aniloxwalze mit einer Kapazität von zwischen 10 und 40 cm³/m²
- und einem Druckzylinder, der mit einer Druckform ausgestattet ist, die aus Folgendem ausgewählt wird:
- einer Schablone plus einem Haftmittel,
- und einer Hülse, und
(3) **dadurch,** dass eine Tinte mindestens eine filmbildende Substanz enthält und ein mineralischer Füllstoff verwendet wird.

2. Einlagiges Druckverfahren nach Anspruch 1, **dadurch gekennzeichnet, dass** die filmbildende Substanz Gummiarabikum ist.

3. Einlagiges Druckverfahren nach Anspruch 1, **dadurch gekennzeichnet, dass** der mineralische Füllstoff zumindest Calciumcarbonat ist.

4. Einlagiges Druckverfahren nach Anspruch 1, **dadurch gekennzeichnet, dass** die filmbildende Substanz Gummiarabikum ist und der mineralische Füllstoff Calciumcarbonat ist.

5. Einlagiges Druckverfahren nach Anspruch 2, **dadurch gekennzeichnet, dass** die Menge des in der Tinte vorhandenen Gummiarabikums zwischen 40 und 95 Gew.-% relativ zu den Tinten-Feststoffen beträgt.

6. Einlagiges Druckverfahren nach Anspruch 3, **dadurch gekennzeichnet, dass** die Menge des in der Tinte vorhandenen Calciumcarbonats zwischen 5 und 60 Gew.-% relativ zu dem Gewicht der Tinten-Feststoffe beträgt.

7. Einlagiges Druckverfahren nach Anspruch 1, **dadurch gekennzeichnet, dass** die Tinte außerdem einen Verbrennungsstoff umfasst.

8. Einlagiges Druckverfahren nach Anspruch 7, **dadurch gekennzeichnet, dass** die Menge des in der Tinte vorhandenen Verbrennungsstoffs zwischen 3 und 10 Gew.-% relativ zu dem Gewicht der Tinten-Feststoffe beträgt.

9. Einlagiges Druckverfahren nach Anspruch 7, **dadurch gekennzeichnet, dass** der Verbrennungsstoff Salz aus einer organischen Säure ist.

10. Einlagiges Druckverfahren nach Anspruch 9, **dadurch gekennzeichnet, dass** der Verbrennungsstoff Salz aus einer organischen Säure ist, die aus der Gruppe gewählt wird, die aus Zitronensäure, Maleinsäure, Milchsäure, Essigsäure und Weinsäure und Mischungen daraus besteht.

11. Einlagiges Druckverfahren nach Anspruch 10, **dadurch gekennzeichnet, dass** der Verbrennungsstoff ein Metallsalz aus Zitronensäure ist.

12. Einlagiges Druckverfahren nach Anspruch 11, **dadurch gekennzeichnet, dass** der Verbrennungsstoff ein Kalisalz aus Zitronensäure ist.

13. Einlagiges Druckverfahren nach Anspruch 1, **dadurch gekennzeichnet, dass** eine Menge zwischen 0,5 und 7 g/m² von Feststoffen auf der Papierumhüllung für Rauchartikel aufgebracht wird.

14. Einlagiges Druckverfahren nach Anspruch 1, **dadurch gekennzeichnet, dass** die Tinte durchgehend auf die Papierumhüllung für Rauchartikel aufgebracht wird.

15. Einlagiges Druckverfahren nach Anspruch 1, **dadurch gekennzeichnet, dass** die Tinte in Form eines geraden Bandes, welligen Bandes oder Zickzackbandes auf die Papierumhüllung für Rauchartikel aufgebracht wird.

16. Einlagiges Druckverfahren nach Anspruch 1, **dadurch gekennzeichnet, dass** die Tinte in einer solchen Menge aufgebracht wird, dass die damit behandelten Bereiche ein Diffusionsvermögen von zwischen 0,010 und 0,300 cm/s aufweisen.

17. Einlagiges Druckverfahren nach Anspruch 1, **dadurch gekennzeichnet, dass** die verwendete Tinte umfasst.
- zwischen 26 % und 39 % Feststoffe,
- Gummiarabikum in einem Prozentsatz zwischen 62 und 85 Gew.-% relativ zu den Tinten-Feststoffen, und
- Calciumcarbonat in einem Prozentsatz zwischen 15 und 38 Gew.-% relativ zu den Tinten-Feststoffen.

18. Papierumhüllung für Rauchartikel, **dadurch gekennzeichnet, dass** sie durch das Verfahren nach einem der Ansprüche 4 oder 17 erhalten werden kann.

19. Rauchartikel, **dadurch gekennzeichnet, dass** er eine Papierumhüllung umfasst, die durch das Verfahren nach einem der Ansprüche 4 oder 17 erhalten werden kann.

## Revendications

1. Procédé d'impression monocouche d'une encre à base d'eau sur une enveloppe de papier pour des articles à fumer, avec pour objectif d'obtenir une enveloppe de papier pour des articles à fumer présentant une faible propension à l'ignition par la technique flexographique, **caractérisé en ce que** (1) l'impression est réalisée dans une machine d'impression flexographique à tambour central en utilisant uniquement un groupe d'impression, (2) ledit groupe est équipé de
- un anilox ayant une capacité comprise entre 10 et 40 cm³/m²
- et un cylindre d'impression équipé d'une forme d'impression choisie parmi :
- un pochoir plus un adhésif,
- et un manchon, et
(3) **en ce qu'**une encre qui comprend au moins une substance filmogène et une charge minérale est utilisée.

2. Procédé d'impression monocouche selon la revendication 1, **caractérisé en ce que** la substance filmogène est une gomme arabique.

3. Procédé d'impression monocouche selon la revendication 1, **caractérisé en ce que** la charge minérale est au moins un carbonate de calcium.

4. Procédé d'impression monocouche selon la revendication 1, **caractérisé en ce que** la substance filmogène est une gomme arabique et la charge minérale est un carbonate de calcium.

5. Procédé d'impression monocouche selon la revendication 2, **caractérisé en ce que** la quantité de gomme arabique présente dans l'encre est comprise entre 40 % et 95 % en poids par rapport aux matières solides de l'encre.

6. Procédé d'impression monocouche selon la revendication 3, **caractérisé en ce que** la quantité de carbonate de calcium présente dans l'encre est comprise entre 5 % et 60 % en poids par rapport aux matières solides de l'encre.

7. Procédé d'impression monocouche selon la revendication 1, **caractérisé en ce que** l'encre comprend également un agent de combustion.

8. Procédé d'impression monocouche selon la revendication 7, **caractérisé en ce que** la quantité de l'agent de combustion dans l'encre est comprise entre 3 % et 10 % en poids par rapport aux matières solides de l'encre.

9. Procédé d'impression monocouche selon la revendication 7, **caractérisé en ce que** l'agent de combustion est un sel dérivé d'un acide organique.

10. Procédé d'impression monocouche selon la revendication 9, **caractérisé en ce que** l'agent de combustion est un sel d'un acide organique choisi dans le groupe constitué par les acides citrique, maléique, lactique, acétique et tartrique et des mélanges de ceux-ci.

11. Procédé d'impression monocouche selon la revendication 10, **caractérisé en ce que** l'agent de combustion est un sel métallique de l'acide citrique.

12. Procédé d'impression monocouche selon la revendication 11, **caractérisé en ce que** l'agent de combustion est un sel de potassium de l'acide citrique.

13. Procédé d'impression monocouche selon la revendication 1 **caractérisé en ce qu'**une quantité comprise entre 0,5 et 7 g/m² de matières solides est déposée sur l'enveloppe de papier pour article à fumer.

14. Procédé d'impression monocouche selon la revendication 1, **caractérisé en ce que** l'encre est appliquée sur l'enveloppe de papier pour articles à fumer de manière continue.

15. Procédé d'impression monocouche selon la revendication 1, **caractérisé en ce que** l'encre est appliquée sur l'enveloppe de papier pour articles à fumer sous forme de bande droite, ondulée ou en zigzag.

16. Procédé d'impression monocouche selon la revendication 1, **caractérisé en ce que** l'encre est appliquée en une quantité telle que les zones traitées avec celle-ci ont une diffusivité comprise entre 0,010 et 0,300 cm/s.

17. Procédé d'impression monocouche selon la revendication 1, **caractérisé en ce que** l'encre utilisée comprend :
- entre 26 % et 39 % de matières solides,
- de la gomme arabique en un pourcentage compris entre 62 % et 85 % en poids par rapport aux matières solides de l'encre, et
- du carbonate de calcium en un pourcentage compris entre 15 % et 38 % en poids par rapport aux matières solides de l'encre.

18. Enveloppe de papier pour article à fumer, **caractérisée en ce qu'**elle peut être obtenue par le procédé défini selon la revendication 4 ou 17.

19. Article à fumer, **caractérisé en ce qu'**il comprend une enveloppe de papier pouvant être obtenue par le procédé défini selon la revendication 4 ou 17.
